# EUROPEAN PATENT APPLICATION

(11) **EP 4 439 014 A1**
(43) Date of publication of application: **02.10.2024**
(21) Application number: 23165478.1
(22) Date of filing: 30.03.2023
(51) Int. Cl.: G01C 21/30

(54) **VEHICLE LOCALIZATION**

(71) Applicant: Zenseact AB, 417 56 Gothenburg (SE)
(72) Inventor: FU, Junsheng, 449 35 Nödinge (SE); BUDER, Michael, 414 67 Göteborg (SE)
(74) Representative: Zacco Sweden AB

(57) **Abstract**

Computer-implemented methods and related aspects for localizing a vehicle on a road of a road network are disclosed. The method comprises for a time step out of a plurality of consecutive time steps, obtaining a set of candidate states for the vehicle on the road, each candidate state being representative of a potential location of the vehicle in the road network. The method further comprises, for each candidate state of the set of candidate states, determining a probability of the vehicle being in that candidate state based on a combined probability value. Moreover, the method comprises determining a sequence of candidate states, over the plurality of consecutive time steps, which is associated with a highest probability out of a plurality of possible sequences of candidate states. Here, each of the plurality of possible sequences of candidate states includes one candidate state from each time step of the plurality of consecutive time steps. Furthermore, the method comprises outputting the road that the vehicle currently is on or a lane that the vehicle currently is in based on the determined sequence of states that is associated with the highest probability.

## Description

### TECHNICAL FIELD

The disclosed technology relates to methods, apparatuses and related aspects for localizing a vehicle on a road within a road network. In particular, but not exclusively the disclosed technology relates to methods, apparatuses and related aspects for estimating a driven path or trajectory of the vehicle using a probabilistic approach where a road network is represented in a logical graph representation.

### BACKGROUND

During the last few years, the research and development activities related to autonomous vehicles have exploded in number and many different approaches are being explored. An increasing portion of modern vehicles have advanced driver-assistance systems (ADAS) to increase vehicle safety and more generally road safety. ADAS - which for instance may be represented by adaptive cruise control (ACC) collision avoidance system, forward collision warning, etc. - are electronic systems that may aid a vehicle driver while driving. Today, there is ongoing research and development within a number of technical areas associated to both the ADAS and the Autonomous Driving (AD) field. ADAS and AD will herein be referred to under the common term Automated Driving System (ADS) corresponding to all of the different levels of automation as for example defined by the SAE J3016 levels (1 - 5) of driving automation, and in particular for level 3, 4 and 5.

The ability to estimate the vehicle's position and orientation in an efficient and robust manner is generally considered a critical function of an ADS. The problem of identifying one's position and orientation on the road, is called map matching, and can more formally be described as the procedure of matching location data to a digital map in order to obtain the vehicle's position in a road network.

Accordingly, one approach to localize the vehicle involves using High Definition (HD) maps (i.e. HD maps) together with sensor fusion and perception algorithms. In more detail, this approach involves matching the output from the vehicle's onboard sensors (such as e.g. GNSS, cameras, Lidar, Radar, accelerometers, gyroscopes, etc.) to various map elements comprised in the HD map in order to derive the vehicle's position on the road network represented in the HD map. Furthermore, many conventional approaches utilize a process of forming multiple hypothesis filters (e.g. one per lane) based on a rough initial position estimate (e.g. GNSS position), whereupon the most probable hypothesis filter is selected by comparing the sensor output with the map elements comprised in the HD map.

However, in the case of complex scenarios or complex road networks, such as e.g. road networks comprising elevated roads, conventional localization algorithms may be inaccurate and/or computationally expensive since the rough initial position estimate may be matched to different overlaying roads (due to inaccurate or completely absent height information) resulting in a high number of initialized hypotheses regarding the vehicle's position that have to be processed. Moreover, in some jurisdictions there are regional restrictions on HD maps and GNSS data such that no height information can be provided, which renders the localization problem even more challenging in certain geographies.

Thus, there is a need for new and improved solutions which provide computationally efficient, accurate and robust vehicle localization.

### SUMMARY

The herein disclosed technology seeks to mitigate, alleviate or eliminate one or more of the above-identified deficiencies and disadvantages in the prior art to address various problems relating to real-time localization of a vehicle on a road of a road network.

In particular, it is an object of some embodiments to provide a solution for localizing a vehicle on a road that is capable of providing accurate results in complex road networks.

Various aspects and embodiments of the disclosed technology are defined below and in the accompanying independent and dependent claims.

A first aspect of the disclosed technology comprises a computer-implemented method for localizing a vehicle on a road of a road network. The method comprises, for a time step out of a plurality of consecutive time steps, obtaining a set of candidate states for the vehicle on the road, each candidate state being representative of a potential location of the vehicle in the road network. The method further comprises, for each candidate state of the set of candidate states, determining a probability of the vehicle being in that candidate state based on a combined probability value. The combined probability value comprises a probability associated with each previous candidate state determined at a preceding time step, a transition probability comprising a probability for the vehicle transitioning from each previous candidate state determined at the preceding time step to that candidate state, an emission probability comprising a probability for the vehicle being at that candidate state given an obtained GNSS position of the vehicle, and an elevated-road ramp probability comprising a probability of the vehicle being at that candidate state given an elevation characteristic of that candidate state and data representative of a relative change in elevation for the vehicle. The method further comprises determining a sequence of candidate states, over the plurality of consecutive time steps, which is associated with a highest probability out of a plurality of possible sequences of candidate states. Here, each of the plurality of possible sequences of candidate states includes one candidate state from each time step of the plurality of consecutive time steps. Furthermore, the method comprises outputting the road that the vehicle currently is on or a lane that the vehicle currently is in based on the determined sequence of states that is associated with the highest probability.

A second aspect of the disclosed technology comprises a computer program product comprising instructions which, when the program is executed by a computing device of a vehicle, causes the computing device to carry out the method according to any one of the embodiments disclosed herein. With this aspect of the disclosed technology, similar advantages and preferred features are present as in the other aspects.

A third aspect of the disclosed technology comprises a (non-transitory) computer-readable storage medium comprising instructions which, when executed by a computing device of a vehicle, causes the computing device to carry out the method according to any one of the embodiments disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

A fourth aspect of the disclosed technology comprises an apparatus for localizing a vehicle on a road of a road network. The apparatus comprises one or more processors configured to, for a time step out of a plurality of consecutive time steps, obtain a set of candidate states for the vehicle on the road, each candidate state being representative of a potential location of the vehicle in the road network. The one or more processors are further configured to for each candidate state of the set of candidate states, determine a probability of the vehicle being in that candidate state based on a combined probability value. The combined probability value comprises a probability associated with each previous candidate state determined at a preceding time step, a transition probability comprising a probability for the vehicle transitioning from each previous candidate state determined at the preceding time step to that candidate state, an emission probability comprising a probability for the vehicle being at that candidate state given an obtained GNSS position of the vehicle, and an elevated-road ramp probability comprising a probability of the vehicle being at that candidate state given an elevation characteristic of that candidate state and data representative of a relative change in elevation for the vehicle. The one or more processors are further configured to determine a sequence of candidate states, over the plurality of consecutive time steps, which is associated with a highest probability out of a plurality of possible sequences of candidate states. Here, each of the plurality of possible sequences of candidate states includes one candidate state from each time step of the plurality of consecutive time steps. Further, the one or more processors are configured to output the road that the vehicle currently is on or a lane that the vehicle currently is in based on the determined sequence of states that is associated with the highest probability. With this aspect of the disclosed technology, similar advantages and preferred features are present as in the other aspects.

A fifth aspect of the disclosed technology comprises a vehicle comprising an apparatus according to any one of the embodiments disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that computationally efficient and robust road-level localization may be provided for ADS-equipped vehicles.

An advantage of some embodiments is that improved location accuracy in complex road networks may be achieved, such as for example in road networks having one or more elevated roads traversing other roads.

An advantage of some embodiments is that the risk of inadvertently or erroneously operating one or more ADS functions on unauthorized roads may be reduced.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart of a method for localizing a vehicle on a road of a road network in accordance with some embodiments.
Fig. 2 is a schematic illustration of a road network modelled in a logical graph representation comprising polygonal chains in accordance with some embodiments.
Fig. 3 is a schematic illustration of a road network modelled in a logical graph representation comprising polygonal chains with associated trellis diagrams over three consecutive time steps in accordance with some embodiments.
Fig. 4 is a schematic perspective view illustration of a road network illustrating a method for localizing a vehicle on a road of a road network having an elevated road utilizing a sliding window approach in accordance with some embodiments.
Fig. 5 is a schematic perspective view illustration of a road network illustrating a method for localizing a vehicle on a road of a road network having an elevated road utilizing a sliding window approach in accordance with some embodiments.
Fig. 6 is a schematic block diagram representation of a vehicle comprising an apparatus for localizing a vehicle on a road of a road network in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

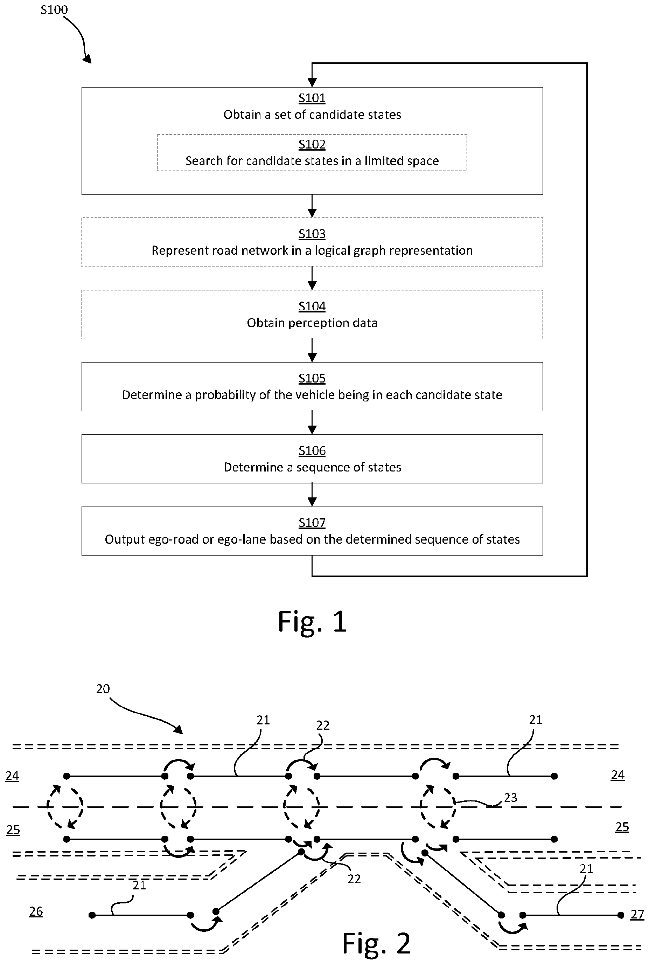

Fig. 1 is a schematic flowchart representation of a method S100 for localizing a vehicle on a road of a road network. In particular, the method S100 provides for a robust real-time road-level localization on an HD map for vehicles having an Automated Driving System (ADS). However, the method S100 may also be used to provide for a robust real-time lane-level localization on an HD map for vehicles having an ADS. The method S100 is preferably a computer-implemented method S100, performed by a processing system of the ADS-equipped vehicle. The processing system may for example comprise one or more processors and one or more memories coupled to the one or more processors, wherein the one or more memories store one or more programs that perform the steps, services and functions of the method S100 disclosed herein when executed by the one or more processors. The method S100 is executed at each time step out of a plurality of consecutive time steps, meaning that the vehicle's ego-road or ego-lane is estimated and output at some sample rate (e.g. 10 Hz, 15 Hz, 20 Hz, etc.). The term "time step" may be construed as a "time instance", "time interval", "time period", or the like.

Accordingly, the method S100 comprises, for a time step out of a plurality of consecutive time steps, obtaining S101 a set of candidate states for the vehicle on the road. Each candidate state is representative of a potential location of the vehicle in the road network. In more detail, each candidate state may represent a particular road of the road network or a particular lane of the road network that the vehicle may travel upon or travel within. In other words, a candidate state comprises a possible location, and optionally a possible heading, of the vehicle on the road. The possible location (and heading) may be defined by a specific road that the vehicle may travel upon or a specific lane that the vehicle may travel within. Thus, the candidate states may be understood as initial "guesses" of the vehicle's position, and optionally the vehicle's heading.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a candidate state may encompass determining or computing a candidate on e.g. GNSS data and/or perception data together with map data. Thus, as used herein, "obtaining" may indicate that a parameter is received at a first entity/unit from a second entity/unit, or that the parameter is determined at the first entity/unit e.g. based on data received from another entity/unit.

In some embodiments, the obtained S101 set of candidate states are all candidate states within a distance from one or more of the last received Global Navigation Satellite System (GNSS) positions of the vehicle. In particular, the obtained S101 set of candidate states may be all candidate states within a defined area encompassing or enclosing the last two obtained GNSS positions of the vehicle. For example, the area encompassing the last two reported, or otherwise obtained, GNSS positions may be a defined area of a suitable size and shape enclosing the last two obtained GNSS positions. The "obtained S101 set of candidate states" may accordingly be all of the potential candidate states that are within that defined area. The term "the last two" obtained GNSS position may be understood as "the two most recently obtained" GNSS positions.

Accordingly, obtaining S101 a set of candidate state may comprise searching S102 for candidate states within a limited search space, where the limited search space is defined by an area encompassing one or more of the last obtained GNSS positions of the vehicle. By limiting the search space for the candidate states, the calculation time and processing resource need is reduced for the localization process. Thus, the localization algorithm can be allowed to operate at a higher sample rate and/or with less computational resources as compared to other known localization algorithms.

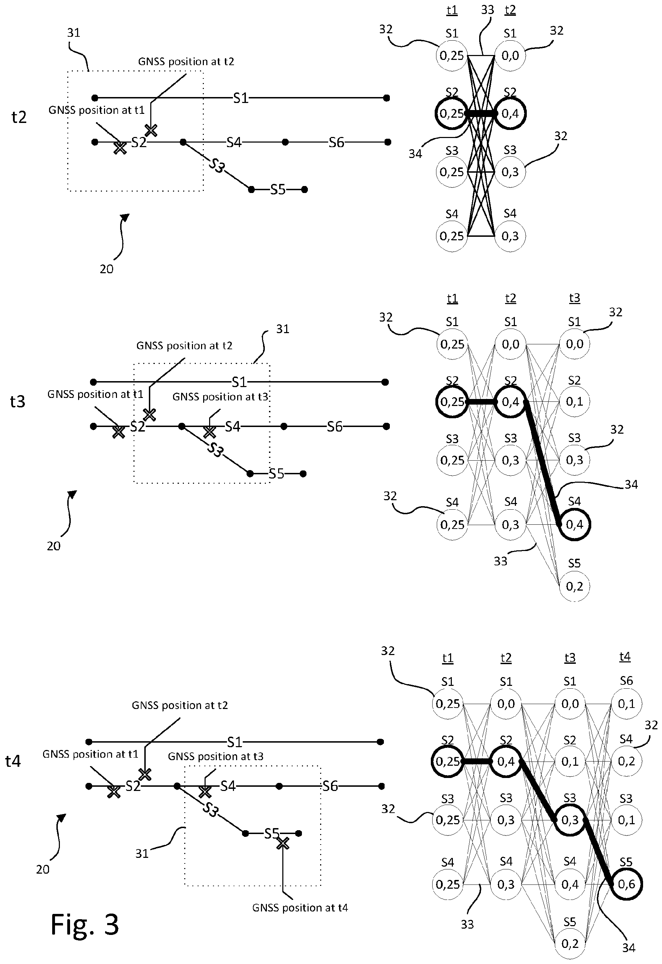

Turning briefly to Fig. 3, an example of the searching S102 for candidate states in the limited search space 13 is illustrated. Here, the limited search space is defined by an area enclosing the last two obtained GNSS positions of the vehicle. The top-most illustration shows the limited search space 31 at time t2 in the form of a rectangular area enclosing the reported GNSS positions at time t1 and t2, respectively. Thus, the available candidate states at time t2 are S1, S2, S3, and S4.

The size, shape and position of the search space 31 may accordingly be dependent on one or more of the last reported GNSS positions of the vehicle. The size (or area) of the search space 31 may be set or predefined, e.g. the size of the search space 31 may for example be 10x10m, 15x15m, 15x20m, 20x20m, 100x100m, 200×300m, and so forth. The size of the search space 31 may be set in dependence of an expected, average, or maximum error of the reported GNSS positions (available from e.g., the specification of the GNSS). Thereby the search space 31 may compensate for potential errors in the GNSS output. Moreover, size of the search space 31 may be set such that the borders of the search space 31 are arranged at a set distance from the GNSS position closest to each border. For example, the borders of the search space 31 may be arranged so to be at least 10m from any of the one or more of the last reported GNSS positions of the vehicle.

However, if the size of the search space 31 is fixed (e.g. at 15x15m), the position of the search space 31 may be set so that a centre point of the search space 31 coincides with a point between the two reported GNSS positions of the vehicle. However, the position of the search space 31 may also be set so that the centre point of the search space 31 is shifted towards the last (or latest) GNSS position of the vehicle. As an additional example, the position of the area 31 may also be set so that the centre point of the area always coincides with the last (or latest) GNSS position of the vehicle while still encompassing the second-to-last (penultimate) GNSS position of the vehicle.

Reverting back to Fig. 1, the method S100 further comprises, for the time step and for each candidate state of the obtained S101 set of candidate states, determining S105 a probability of the vehicle being in that candidate state based on a combined probability value. In other words, a probability ("combined probability value") is computed for each candidate state, which represents a likelihood or probability of the vehicle being in that particular candidate state. The combined probability value comprises a plurality of different probability values, each representing a component of the combined probability value. In some embodiments, "a component" of a probability or probability value may be understood as a factor of the probability or probability value, or a variable upon which the probability or probability value is dependent.

In more detail, the combined probability value comprises:
- A probability value associated with each previous candidate state determined at a preceding time step. This probability value may be understood as the "combined probability value" of each candidate state at the preceding time step.
- A transition probability comprising a probability for the vehicle transitioning from each previous candidate state determined at the preceding time step to that candidate state.
- An emission probability comprising a probability for the vehicle being at that candidate state given an obtained GNSS position of the vehicle.
- An elevated-road ramp probability comprising a probability of the vehicle being at that candidate state given an elevation characteristic of that candidate state and data representative of a relative change in elevation for the vehicle.

In some embodiments, the combined probability value is a product of the four above-mentioned probabilities. In other words, the combined probability value may be determined as a product of the probability associated with each previous candidate state determined at a preceding time step, the transition probability, the emission probability, and the elevated-road ramp probability. The terms "probability" and "probability value" are used interchangeably herein.

The method S100 further comprises, determining S106 a sequence of states, over the plurality of consecutive time steps, which is associated with a highest probability out of a plurality of possible sequences of states, wherein each of the plurality of possible sequences of states includes one state from each time step of the plurality of consecutive time steps. In other words, each sequence of states includes a single candidate state from each time step across the plurality of consecutive time steps. Accordingly, the previously determined combined probability values for each candidate states (in the current time step and in one or more preceding time steps) are used to derive the sequence of states.

In some embodiments, the method S100 comprises forming a state space model, where each of the obtained S101 candidate states are represented by a state in the state space model. A state space model is in the present context to be understood as type of probabilistic graphical model, which describes a probabilistic dependence between the latent state variable and the observed measurement. The state or the measurement can be either continuous or discrete. The state space model is used to provide a general framework for analysing deterministic and stochastic dynamical systems that are measured or observed through a stochastic process. The state space model may be in the form of a Hidden Markov Model (HMM), and the obtained S101 candidate states may accordingly be represented by a hidden state in the HMM.

In the context of an HMM, the steps of determining S105 a probability of the vehicle being in a candidate state and determining S106 a sequence of states may accordingly be solved using a dynamic programming algorithm, such as a Viterbi algorithm. The Viterbi algorithm outputs the most likely sequence of states in the HMM, which in the context of this disclosure, results in the most likely path taken by the vehicle through the road network over the plurality of consecutive time steps.

In more detail, the Viterbi algorithm is a dynamic programming algorithm used to find the most likely sequence of hidden states in a Hidden Markov Model (HMM). In an HMM, we have a sequence of observed events, and a sequence of hidden states that generate those events. The Viterbi algorithm computes the most probable sequence of hidden states that generated the observed sequence. The Viterbi algorithm works by computing the probability of the observed sequence given the model and the current hidden state. Then, it recursively computes the probability of the observed sequence up to the current time step, given all possible hidden states up to the current time step. This involves computing the maximum probability of each possible hidden state at each time step, and keeping track of which hidden state maximizes the probability. Accordingly, the result of the Viterbi algorithm is a sequence of hidden states that correspond to the most probable explanation of the observed sequence, given the HMM model.

Further, as an alternative approach, in the context of an HMM, the steps of determining S105 a probability of the vehicle being in a candidate state and determining S106 a sequence of states may accordingly be solved using a forward-backward algorithm together with a back-tracing algorithm that re-assesses the previous candidate states given the determined candidate state in a current time step. More specifically, the forward-backward algorithm can be used to find the most likely candidate state at each time step, and the back-tracing algorithm is used to find the most likely sequence of states across the plurality of consecutive time steps.

The forward-backward algorithm makes use of the principle of dynamic programming to efficiently compute the values that are required to obtain the posterior marginal distributions in two passes. In the first pass, the forward-backward algorithm computes a set of forward probabilities which provide, for all *t* ∈ {1, ..., T), the probability of ending up in any particular candidate state given the first t observations in the sequence, i.e. *P*(*Xₜ*|*o*_{1:*t*}), where *o*_{1:*t*} is the observations/emissions in the sequence. In the second pass, the forward-backward algorithm computes a set of backward probabilities which provide the probability of observing the remaining observations given any starting point t, i.e. *P*(*o*_{*t*+1:*T*}|*Xₜ*)*.* These two sets of probability distributions can then be combined to obtain the distribution over states at any specific point in time given the entire observation sequence.

In reference to the above-mentioned probabilities comprised in the combined probability value, the general Viterbi and forward-backward algorithms are adapted so to include the elevated-road ramp probability. In some embodiments, the elevated-road ramp probability may be construed as a component of the emission probability. However, the elevated-road ramp probability has been mentioned separately in order to further elucidate the adaptation of the Viterbi and forward-backward algorithms for vehicle localization applications.

Further, the method comprises outputting S107 the road that the vehicle currently is on or a lane that the vehicle currently is in based on the determined S106 sequence of states that is associated with the highest probability. In more detail, the determined S106 sequence of states can be construed as a set of positions that the vehicle has had, either in reference to one or more specific lanes that the vehicle has travelled within or one or more roads that the vehicle has travelled upon during the plurality of consecutive time steps. Thus, given the knowledge of the one or more specific lanes that the vehicle has travelled within or one or more roads that the vehicle has travelled upon, one can derive the road that the vehicle currently is on or a lane that the vehicle currently is in.

Further, in some embodiments, the method S100 comprises controlling one or more ADS functions based on the outputted S107 road or lane. For example, if the output S107 indicates that the vehicle has entered a road on which one or more ADS functions are not validated or verified to operate on, then those functions may be inhibited or suppressed. Similarly, if the output S107 indicates that the vehicle has entered a road on which one or more ADS functions are validated or verified to operate on, then those functions may be activated or made available for activation by an occupant of the vehicle.

In some embodiments, the method S100 further comprises forming S103 a logical graph representation of the road network. In some embodiments, the road network is represented by a set of polygonal chains, where each polygonal chain comprises a plurality of connected line segments coinciding with a centreline of a corresponding lane of the road network. Thus, each candidate state may be defined by a respective line segment.

Turning briefly to Fig. 2, which is a schematic illustration of a logical graph representation 20 of a road network in accordance with some embodiments. Here, the logical graph representation 20 comprises a set of polygonal chains. The road network comprises two lanes 24, 25 on a main road, a third lane 26 forming an entrance to the main road and a fourth lane 27 forming an exit from the main road. Each polygonal chain accordingly represents a lane 24, 25, 26, 27 of the road network, or more specifically, a lane centre, and each line segment 21 represents a candidate state.

Moreover, each line segment 21 has connections to the preceding line segment and to the succeeding line segment as indicated by the arrows 22. However, some line segments 21 may have additional connections in case of lane splits or mergers as indicated in Fig. 2. Furthermore, in addition to these connections, the line segments 21 may have further connections to line segments of a parallel lane, as indicated by broken arrows 23. By modelling the road network with a logical graph representation having polygonal chains comprising a plurality of connected line segments, where the connectivity between line segments is limited to the end-points (vertices) of the line segments, one can model lane changes (i.e. candidate state changes) such that they are only allowed to occur at the end-points. This reduces the complexity of the computation S105 for the transition probabilities, thereby reducing the computational need for computing S105 the candidate state probabilities (i.e. the combined probability value), which renders the localization method S100 more computationally efficient.

In some embodiments, the transition probability comprises a component modelled by using an exponential distribution on a difference between (a) a Euclidian distance between that candidate state and each previous candidate state determined at the preceding time step, and (b) a distance following the road network between that candidate state and each previous candidate state determined at the preceding time step. In other words, the transition probability may comprise a component that is modelled by using an exponential distribution on a difference between (a) and (b) above.

Furthermore, in some embodiments, the emission probability comprises a component modelled by a Gaussian distribution of an error distance between the obtained GNSS position and that candidate state. However, other distributions than Gaussian distributions are possible to use to model the component of the emission probability. The "error distance" between the obtained GNSS position and a candidate state may be understood as a Euclidian distance between the obtained GNSS position and the candidate state.

Still further, in some embodiments, the elevated road-ramp probability comprises a component modelled by a step function by comparing the data representative of a relative change in elevation for the vehicle and the elevation characteristic of that candidate state such that a higher probability is assigned to each candidate state of the set of candidate states that is associated with an elevation characteristic defining an elevation-change when the data representative of a relative change in elevation for the vehicle indicates a relative change in elevation exceeding a first value than for those candidate states of the set of candidate states that are associated with an elevation characteristic defining no elevation-change.

For example, in a scenario where there are four candidate states, and a first candidate state is a lane segment or road segment going up a slope, while the other candidate states are lane segments or road segments of a horizontal road. Then, if the data representative of a relative change in elevation for the vehicle indicates a relative change in elevation exceeding a first value, i.e. the data indicates that the vehicle is traveling up a slope, the first candidate state will be assigned a higher probability as compared to the other candidate states.

The data representative of a relative change in elevation for the vehicle may for example be obtained from be obtained by visual odometry or visual-inertial odometry. Visual odometry refers to process of determining equivalent odometry information using sequential camera images to estimate the vehicle's trajectory. Visual-Inertial odometry (VIO) is the process of estimating the state (pose and velocity) of an agent (e.g., vehicle) by using the output of one or more cameras together with the output from one or more Inertial Measurement Units (IMUs) of the agent., where an IMU comprises one or more gyroscopes and/or one or more accelerometers.. However, the data representative of a relative change in elevation for the vehicle may be obtained from indirect measurements, such as e.g. changes in motor torque while the vehicle is traveling at constant speed.

As mentioned, "a component" of a probability (e.g. the transition probability or the elevated road-ramp probability) may be understood as a factor of the probability, or a variable upon which the probability is dependent.

In some embodiments, the method further comprises, for the time step out of the plurality of time steps, obtaining S104 perception data comprising information about a surrounding environment of the vehicle. The perception data may for example be received from a perception module or a perception system of the vehicle, where the perception system is configured to receive output data from one or more sensors of the vehicle.

The term "perception data" refers to the information gathered by sensors and other technologies that are used by ADS-equipped vehicles to detect and interpret their environment. This includes data collected from cameras, lidar, radar, and other sensors that help the vehicle "perceive" its surroundings and make decisions based on that information. The perception data collected by the vehicle may include the position, speed, and direction of nearby objects, position and type of road markings, position and type of traffic signs, and other relevant information. This data may then be processed by the vehicle's onboard computer to help it make decisions on steering, acceleration, braking, and other actions necessary to safely navigate the environment. Accordingly, the term "perception" data may refer to "surroundings assessment" data, "spatial perception" data, "processed sensory" data and/or "temporal dependencies" data, whereas perception "data" may refer to perception "information" and/or "estimates". The term "obtained" from a perception module or perception system, on the other hand, may refer to "derived" from a perception model and/or "based on output data" from a perception module or system, whereas perception module/system configured to "generate the set of perception data" may refer to perception module/system adapted and/or configured to "estimate the surroundings of said vehicle", "estimate at least a portion of surroundings of said vehicle", "determine surroundings of said vehicle", "interpret sensory information relevant for the autonomous manoeuvring of said vehicle", and/or "estimate surroundings of said vehicle and make model predictions of future states of the surroundings of said vehicle".

Moreover, in some embodiments, the emission probability comprises a lane marker similarity probability that is based on a comparison between lane marker representations from the obtained perception data and lane marker representations from map data for that candidate state. The emission probability may further comprise a road edge similarity probability that is based on a comparison between road edge representations from the obtained perception data and road edge representations from map data for that candidate state. Furthermore, the emission probability may comprise a traffic sign similarity probability that is based on a comparison between traffic sign positions from the obtained perception data and traffic sign positions from map data for that candidate state. In some embodiments, the emission probability further comprises a road pole similarity probability that is based on a comparison between road pole positions from the obtained perception data and road pole positions from map data for that candidate state. The emission probability may further comprise a tracked vehicle-based similarity probability that is based on a comparison between a position of a tracked vehicle from the obtained perception data and a road geometry from map data for that candidate state.

In some embodiments, the emission probability comprises a product of two or more of the lane marker similarity probability, the road edge similarity probability, the traffic sign similarity probability, the road pole similarity probability, or the tracked vehicle-based similarity probability. In other words, the lane marker similarity probability, the road edge similarity probability, the traffic sign similarity probability, the road pole similarity probability, and the tracked vehicle-based similarity probability may be factors of the emission probability.

In some embodiments, the method S100 is performed using a sliding window approach. In more detail, the plurality of consecutive time steps may have a set number of time steps. Thus, one location of the vehicle (i.e. an ego-lane or ego-road) is output S107 at each time step, and a set number of (historical) locations are kept in memory (i.e. "in the window"). Thus, for each new location that is added in the front of the list that defines the "window" will remove one in the tail of the list. The size of the sliding window may for example be set to be able to derive the vehicles path from the last 10 seconds, 20 seconds, 30 seconds, 60 seconds, etc.

However, in some embodiments, the size of the sliding window is dynamically adapted based on a type of road network or a state parameter of the vehicle (e.g. a speed of the vehicle). In other words, the number of time steps included in the plurality of consecutive time steps window is dynamically adapted based on a type of road network or a state parameter of the vehicle (e.g. a speed of the vehicle). For example, the size of the sliding window may be smaller when the road network comprises a highway with no entry lanes or exit lanes as compared to a more complex road network with several entrances and exits and elevated roads. Similarly, the size of the sliding window may be smaller when the vehicle is traveling at higher speeds (e.g. above 80 km/h) as compared to when the vehicle is traveling at lower speeds (e.g. less than 50 km/h). By having a larger sliding window in more complex situations and a smaller sliding window in less complex situations allows for the localization method to be dynamically adapted so to optimize the accuracy with respect to the situational need. The size of the sliding window affects the number of previous locations that are stored in memory.

In some embodiments, the size of the sliding window is increased when the vehicle is traveling in more complex road networks. Complex road networks may for example be in urban areas, or road networks with a multitude of over-passes and underpasses. Here, the vehicle can potentially make a high number of location changes over time, and the additional number of considered "historical" locations may improve the overall localization algorithm in such situations. However, increasing the size of the sliding window comes at the expense of increased use of computational resources for storing more "historical" locations and an increased number of "historical" locations that have to be processed for determining the sequence of states at any given time step.

Similarly, the size of the sliding window may be reduced when the vehicle is traveling less complex road networks. Less complex road networks may for example be a highway without any entrances or exits. Reducing the size of the sliding window in less complex situations will reduce the computational need while still providing sufficiently accurate localization for the vehicle as there is a reduced number of possible location changes over time.

The determination of whether a road network is more or less complex may for example be based on the number of candidate states that are included in the set of candidate states that are evaluated at each time step. A high number of candidate states may accordingly be used as an indicator of a complex road network.

Accordingly, some embodiments herein provide a method for efficiently and accurately determining the road that the vehicle is currently traveling upon using at least GNSS information and HD map data. Moreover, some embodiments herein provide a method capable of determining the road that the vehicle is currently traveling upon in complex road networks where there are elevated roads extending above other roads, even if the GNSS information lacks any elevation information.

In short, the method S100 may be construed as a map matching problem of finding the vehicle's ego-road or ego-lane given a trajectory as sequentially ordered spatial points, each point comprising a 2D-coordinate, and optionally a heading, and HD map comprising information about a road geometry and geographical coordinates of the road network. The sequentially ordered spatial points may for example be obtained from a Global Navigation Satellite System (GNSS). In other words, the localization algorithm disclosed herein uses an input of GNSS data over a plurality of consecutive time steps and HD map data in order to output an ego-road or ego-lane of the vehicle. However, it should be noted that some embodiments include input in the form of perception data, and vehicle state parameters (e.g., speed, yaw rate, etc.) as well. Thus, in some embodiments, the method S100 further comprises obtaining HD map data comprising information about a road geometry and geographical coordinates of the road network, and obtaining GNSS data comprising estimated positions of the vehicle.

Executable instructions for performing these functions are, optionally, included in a non-transitory computer-readable storage medium or other computer program product configured for execution by one or more processors.

Fig. 3 is a schematic illustration of a road network modelled in a logical graph representation 20 comprising polygonal chains with associated trellis diagrams over three consecutive time steps (t2, t3, t4) in accordance with some embodiments. Here, each candidate state is represented by a line segment of a polygonal chain, and each line segment corresponds to a lane of the road network modelled by the logical graph representation 20.

Fig. 3 serves to elucidate some embodiments where the candidate states S1-S6 are represented by hidden states 32 in a Hidden Markov Model, which in turn is represented as a trellis diagram, where time steps t1-t4 are illustrated. Each node 32 in the trellis diagram corresponds to a candidate state S1-S6 at a given time step t1-t4, and the interconnecting lines 33 represent possible transitions to states 32 at the next time step. In particular, the interconnecting lines 33 represent the transition probabilities between the states 32. A useful property of this particular representation is that every possible state sequence in the model corresponds to a unique path through the trellis, and the other way around. Because of this, it is a useful representation when applying dynamic programming algorithms (e.g. Viterbi algorithm) or a forward-backward algorithm with back-tracing to an HMM for finding the most probable path through the model.

The illustrated example of Fig 3, starts from the second time step t2. The combined probability values for the candidate states of the preceding time step (t1) were initialized to have equal probabilities (0,25), and stored in memory. The combined probability values of the candidate states of the first time step (t1) are stored in memory since they are used as input during the determination of the combined probabilities values at the second time step (t2), and for determining the most likely sequence of states at over the time period t1-t2.

Then, at time step t2 a set of candidate states are obtained S1-S4. In more detail, the candidate states are searched in a limited search space 31 that is defined by an area enclosing the last two obtained GNSS positions of the vehicle. Thus, at time step t2, there are four possible candidate states S1-S4. Next, a combined probability value is determined for each of the four possible candidate states. As indicated in the figure, candidate state S2 is associated with the highest combined probability value (0,4) and therefore represents a most likely location of the vehicle within the road network. Next, a most likely sequence of candidate states is determined. In other words, the candidate state that is associated with a highest probability out of a plurality of possible sequences of candidate states is determined. The most likely sequence is indicated with the thicker lines 34 in Fig. 3. Thus, for time step t2, the most likely sequence of candidate states is S2-S2 over the time period t1 to t2. The combined probability values of the candidate states of the first and second time steps (t1, t2) are then accordingly stored in memory. Here it assumed that the localization algorithm was started at time t1, by a simple initialization of the candidate states, but the location of the vehicle was output for the first time at time t2.

It should be noted that when it is stated that several process steps are performed "at a time step" it does not necessarily mean that all of the process steps are executed concurrently, but may be performed consecutively, as readily understood by the skilled person in the art. Thus, the various process steps performed "at" a time step, may be understood as that they are performed "for" that time step, "in association with" that time step, "based on data associated with" that time step, "during" that time step, or the like.

The process is then repeated at the third time step t3, resulting in a most likely of sequence 34 of candidate states S2-S2-S4 over the time period t1 to t3. Similar as before, combined probability values of the candidate states of the first, second, and third time steps (t1, t2, t3) are then accordingly stored in memory. The number of "time steps" that are stored in memory may be predefined, and controlled based on a sliding window approach as exemplified in the foregoing.

Then, at the fourth time step t4, the process is repeated once again, where a set of candidate states is obtained S3, S4, S5 and S6. Then, a combined probability value is determined for each of the obtained candidate states S3, S4, S5 and S6 at the fourth time step (t4), and a most likely sequence of candidate states is determined at the fourth time step (t4). Here it is noted that the candidate state associated with the highest probability value is state S5, but the high probability value (0,6) is contingent upon a state transition from candidate state S3 of the third time step (t3), wherefore the most likely sequence of candidate state resulted in a change for the third time step (t3) as a transition from state S4 to S5 for time steps t3 to t4 resulted in a very low transition probability. In other words, the algorithm self-adjusted the most likely sequence of candidate states to S2-S2-S3-S5 at the fourth time step (t4). Moreover, as indicated in Fig. 3, the limited search space 31 is adjusted based on the last two obtained GNSS positions at every time step t2-t4.

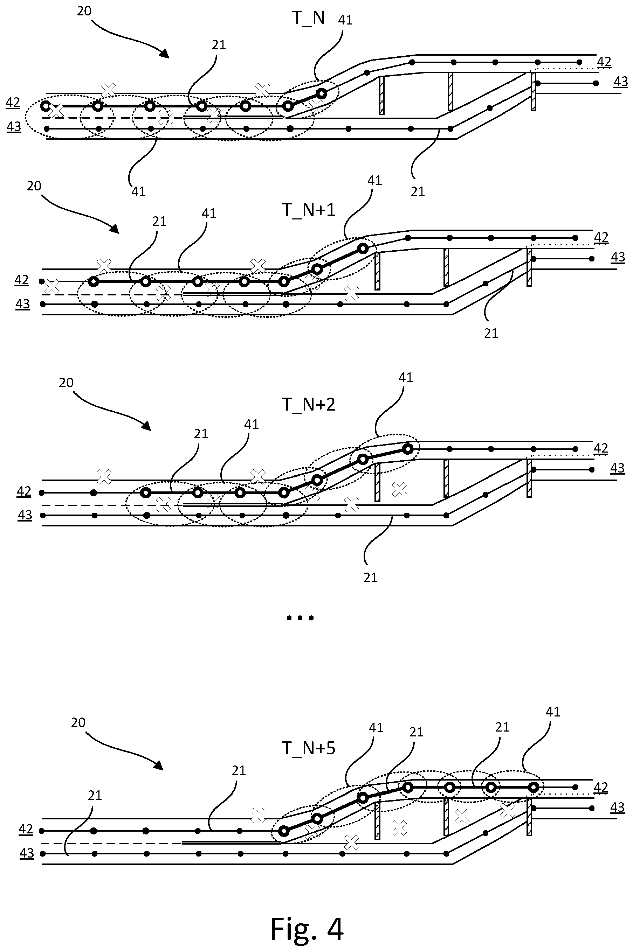

Fig. 4 is a schematic perspective view illustration of a road network illustrating a method for localizing a vehicle on a road of a road network having an elevated road utilizing a sliding window approach in accordance with some embodiments. In more detail, Fig. 4 shows a time series from T_N, T_N+1, T_N+2, and T_N+5 where a vehicle has approached a lane split, where the left lane 42 (assumed traveling direction is left to right for both lanes 42, 43) continues up a ramp to an elevated road 42 that extends above a different road 43 that is a continuation of the right lane 43 after the lane split.

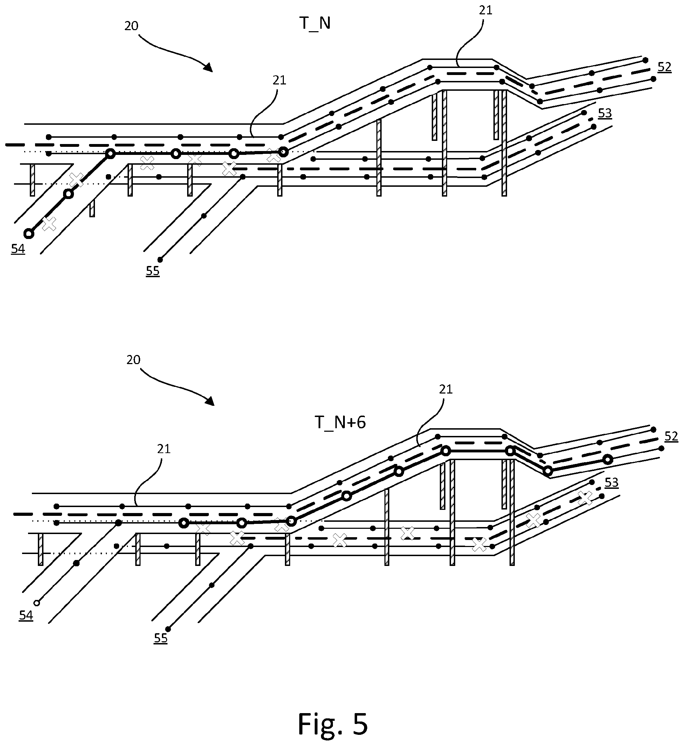

In the illustrated example, the output from the localization algorithm is at a road-level granularity (in contrast to lane-level granularity). In other words, the output is the road that the vehicle currently is on (i.e. ego-road), as indicated by the broken line circles 41. However, the most likely sequence of candidate states is still on a lane-level granularity as indicated by the thicker line segments that represented the most likely sequence of candidate state at each time step T_N to T_N+5. Stated differently, the thicker line segments represented the lane in the HD map that the vehicle has been matched to at each time step. Road-level granularity (in contrast to lane-level granularity) may for example be utilized in situations where the input data to the localization algorithm is insufficient to be able to provide lane level accuracy, but the ego-road can still be determined as long as the vehicle's location is matched to one of the lanes of the road. Thus, even though the most likely sequence of states is in the form of a sequence of ego-lanes, the confidence level of the determined ego-lanes may not be sufficiently high to output a lane-level localization, and the localization algorithm output may therefore be set to road-level localization instead. However, as readily understood by the skilled person in the art, the output from the localization algorithm as disclosed herein may also be at a lane-level granularity, as for example illustrated in Fig. 5.

Furthermore, Fig. 4 serves to elucidate an advantage in terms of improved localization accuracy of some embodiments where a sliding window approach is used. In more detail, since the "historical" determined candidate states are stored in memory, the association to the "elevated road" 42 is maintained at for example time step T_N+5, even though the reported GNSS positions (indicated by X in Fig. 4), may be closer to the road 43 below, especially if they only include 2D information (i.e. they include no elevation information). In contrast, if no historical candidate states would have been considered, a localization algorithm might have erroneously output that the vehicle is currently on the road 43 below at for example time step T_N+5.

Fig. 5 is another schematic perspective view illustration of a road network 20 illustrating a method for localizing a vehicle on a road of a road network having an elevated road utilizing a sliding window approach in accordance with some embodiments. In more detail, Fig. 5 shows the lanes (i.e. candidate states) that the vehicle has been matched to at a first time step T_N, and at a later time step T_N+6, where the later time step T_N+6 is the 6th time step following the first time step. Similar to Fig. 4, there are two main roads 52 and 53, where the first road 52 is overlying the second road 53, causing the reported GNSS positions (indicated by X in Fig. 5) to be ambiguous with respect to which of the two roads that the vehicle is currently traveling upon. In particular for situations where the reported GNSS positions only include 2D information.

However, due to the utilization of a sliding window approach, this ambiguity in the reported GNSS positions can be mitigated. In more detail, tracing back the previously determined candidate states of the vehicle will indicate that the vehicle traversed the on-ramp 54 that is connected to the elevated road 52 and can therefore be matched correctly to the right lane of the elevated road 52, instead of a lane of the lower road 53 that may be closer to the reported GNSS positions.

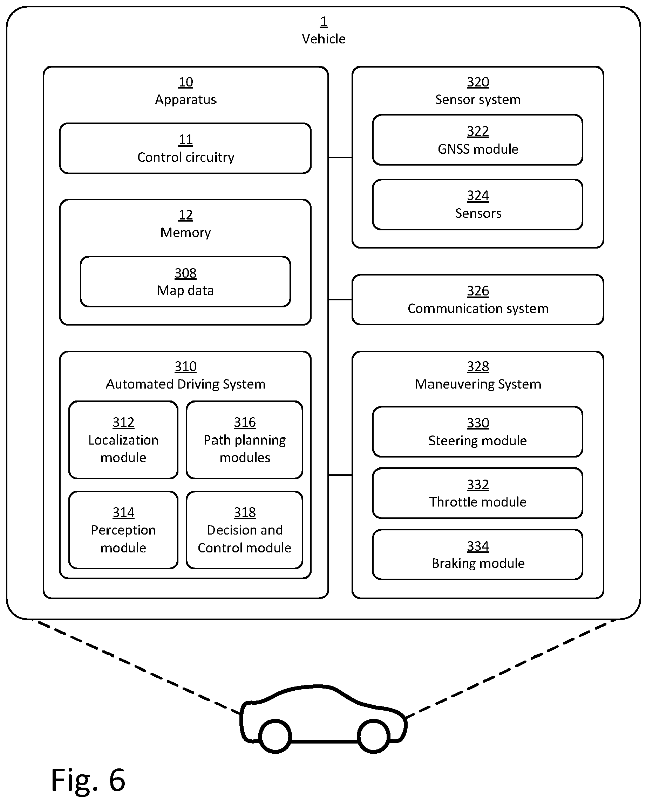

Fig. 6 is a schematic illustration of an ADS-equipped vehicle 1 comprising an apparatus 10 for localizing a vehicle on a road of a road network. As used herein, a "vehicle" is any form of motorized transport. For example, the vehicle 1 may be any road vehicle such as a car (as illustrated herein), a motorcycle, a (cargo) truck, a bus, etc.

The apparatus 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the apparatus 10 may form a part of the ADS 310, i.e. the apparatus 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the technology disclosed herein. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 6. Moreover, the vehicle 1 may comprise further elements than those shown in Fig. 6. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 6 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The GNSS module 322 may for example be realized as a Real Time Kinematics (RTK) GPS in order to improve accuracy. In some embodiments, the methods discussed in the foregoing are implemented as an algorithm of the localization module 312 of the ADS 310.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

In more detail, the apparatus 10 comprises one or more processors configured to, for a time step out of a plurality of consecutive time steps, obtain a set of candidate states for the vehicle on the road, each candidate state being representative a potential location of the vehicle 1 in the road network. The one or more processors are further configured to, for each candidate state of the set of candidate states, determine a probability of the vehicle being in that candidate state based on a combined probability value. The combined probability value comprises a probability associated with each previous candidate state determined at a preceding time step and a transition probability comprising a probability for the vehicle 1 transitioning from each previous candidate state determined at the preceding time step to that candidate state. The combined probability value further comprises an emission probability comprising a probability for the vehicle 1 being at that candidate state given an obtained GNSS position of the vehicle, and an elevated-road ramp probability comprising a probability of the vehicle 1 being at that candidate state given an elevation characteristic of that candidate state and data representative of a relative change in elevation for the vehicle 1.

The one or more processors are further configured to determine a sequence of candidate states (34), over the plurality of consecutive time steps, which is associated with a highest probability out of a plurality of possible sequences of candidate states. Each of the plurality of possible sequences of candidate states includes one candidate state from each time step of the plurality of consecutive time steps. Furthermore, the one or more processors are configured to output the road that the vehicle (1) currently is on or a lane that the vehicle currently is in based on the determined sequence of states that is associated with the highest probability.

The embodiments as disclosed herein may be implemented as a "road check" module of a vehicle, where the output from this "road check" module is a current ego-road of the vehicle. In more detail, the embodiments disclosed herein may be used to determine the ego-road of the vehicle (i.e. the road that the vehicle is currently traveling upon), and once the ego-road of the vehicle has been determined, this can be provided as an input to other more complex and more precise localization algorithms. An advantage of some embodiments is accordingly that the computational footprint of the "more complex and more accurate localization algorithm" can be reduced since those algorithms do not need to evaluate other nearby roads.

Moreover, the performance of the overall localization function of the ADS may be improved with increased robustness and accuracy. Accordingly, some embodiments herein may provide an extra safety layer for vehicle localization, and reduce the risk of accidental or erroneous activation of ADS functions on unauthorized roads.

Even the above-described embodiments may be considered to focus on real-time localization or run-time localization, the process and teachings herein can be executed offline based on historical perception data and HD map data in order to perform HD map updates. In more detail, by being able to accurately trace the trajectories or paths of several vehicles, one can discover if areas of the HD maps are outdated (e.g. the paths of the vehicles do not coincide with the road geometry provided in the HD maps), and update the map accordingly.

The herein disclosed technology has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the apparatus 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

Accordingly, it should be understood that parts of the described solution may be implemented either in the vehicle 1, in a system located external the vehicle 1, or in a combination of internal and external the vehicle. For instance, in a server in communication with the vehicle, a so called cloud solution. For instance, sensor data may be sent to an external system and that system performs the step of determining the combined probability value for each candidate state, and/or the step of determining a sequence of candidate states. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various obtaining steps, determining steps, outputting steps, and controlling steps. The above mentioned and described embodiments are only given as examples and should not be limiting to the present technology. Other solutions, uses, objectives, and functions within the scope of the invention as claimed in the below described patent claims should be apparent for the person skilled in the art.

## Claims

1. A computer-implemented method (S100) for localizing a vehicle on a road of a road network, the method comprising:
for a time step out of a plurality of consecutive time steps:
obtaining (S101) a set of candidate states for the vehicle on the road, each candidate state being representative of a potential location of the vehicle in the road network;
for each candidate state of the set of candidate states, determining (S105) a probability of the vehicle being in that candidate state based on a combined probability value comprising:
a probability associated with each previous candidate state determined at a preceding time step,
a transition probability comprising a probability for the vehicle transitioning from each previous candidate state determined at the preceding time step to that candidate state,
an emission probability comprising a probability for the vehicle being at that candidate state given an obtained GNSS position of the vehicle, and
an elevated-road ramp probability comprising a probability of the vehicle being at that candidate state given an elevation characteristic of that candidate state and data representative of a relative change in elevation for the vehicle;
determining (S106) a sequence of candidate states, over the plurality of consecutive time steps, which is associated with a highest probability out of a plurality of possible sequences of candidate states, wherein each of the plurality of possible sequences of candidate states includes one candidate state from each time step of the plurality of consecutive time steps;
outputting (S107) the road that the vehicle currently is on or a lane that the vehicle currently is in based on the determined sequence of states that is associated with the highest probability.

2. The method (S100) according to claim 1, wherein the road network is represented by a set of polygonal chains, each polygonal chain comprising a plurality of connected line segments coinciding with a centreline of a corresponding lane of the road network, and wherein each candidate state is defined by a respective line segment.

3. The method (S100) according to claim 2, wherein each polygonal chain out of the plurality of polygonal chains is representative of a lane within the road network.

4. The method (S100) according to any one of claims 1-3, wherein the obtained (S101) set of candidate states are all candidate states within a distance from one or more last received Global Navigation Satellite System, GNSS, positions of the vehicle.

5. The method (S100) according to claim 4, wherein the obtained (S101) set of candidate states are all candidate states within a defined area enclosing the most recent two obtained GNSS positions of the vehicle.

6. The method (S100) according to any one of claims 1-5, wherein the transition probability comprises a component modelled by using an exponential distribution on a difference between:
a Euclidian distance between that candidate state and each previous candidate state determined at the preceding time step, and
a distance following the road network between that candidate state and each previous candidate state determined at the preceding time step.

7. The method (S100) according to any one of claims 1-6, wherein the emission probability comprises a component modelled by a Gaussian distribution of an error distance between the obtained GNSS position and that candidate state.

8. The method (S100) according to any one of claims 1-7, wherein the elevated road-ramp probability comprises a component modelled by a step function by comparing the data representative of a relative change in elevation for the vehicle and the elevation characteristic of that candidate state such that a higher probability is assigned to each candidate state of the set of candidate states that is associated with an elevation characteristic defining an elevation-change when the data representative of a relative change in elevation for the vehicle indicates a relative change in elevation exceeding a first value than for those candidate states of the set of candidate states that are associated with an elevation characteristic defining no elevation-change.

9. The method (S100) according to any one of claims 1-8, further comprising:
for the time step out of the plurality of consecutive time steps:
obtaining (S104) perception data comprising information about a surrounding environment of the vehicle;
wherein the emission probability comprises:
a lane marker similarity probability that is based on a comparison between lane marker representations from the obtained perception data and lane marker representations from map data for that candidate state;
a road edge similarity probability that is based on a comparison between road edge representations from the obtained perception data and road edge representations from map data for that candidate state;
a traffic sign similarity probability that is based on a comparison between traffic sign positions from the obtained perception data and traffic sign positions from map data for that candidate state;
a road pole similarity probability that is based on a comparison between road pole positions from the obtained perception data and road pole positions from map data for that candidate state; and/or
a tracked vehicle-based similarity probability that is based on a comparison between a position of a tracked vehicle from the obtained perception data and a road geometry from map data for that candidate state.

10. The method (S100) according to any one of claims 1-9, wherein the combined probability value is a product of the probability associated with each previous candidate state determined at a preceding time step, the transition probability, the emission probability, and the elevated-road ramp probability.

11. The method (S100) according to any one of claims 1-10, wherein the method is performed using a sliding window approach.

12. A computer program product comprising instructions which, when the program is executed by a computing device of a vehicle, causes the computing device to carry out the method according to any one of claims 1-11.

13. A computer-readable storage medium comprising instructions which, when executed by a computing device of a vehicle, causes the computing device to carry out the method according to any one of claims 1-11.

14. An apparatus (10) for localizing a vehicle (1) on a road of a road network, the apparatus comprising one or more processors (11) configured to:
for a time step out of a plurality of consecutive time steps:
obtain a set of candidate states for the vehicle on the road, each candidate state being representative of a potential location of the vehicle (1) in the road network;
for each candidate state of the set of candidate states, determine a probability of the vehicle being in that candidate state based on a combined probability value comprising:
a probability associated with each previous candidate state determined at a preceding time step,
a transition probability comprising a probability for the vehicle (1) transitioning from each previous candidate state determined at the preceding time step to that candidate state,
an emission probability comprising a probability for the vehicle (1) being at that candidate state given an obtained GNSS position of the vehicle, and
an elevated-road ramp probability comprising a probability of the vehicle (1) being at that candidate state given an elevation characteristic of that candidate state and data representative of a relative change in elevation for the vehicle (1);
determine a sequence of candidate states (34), over the plurality of consecutive time steps, which is associated with a highest probability out of a plurality of possible sequences of candidate states, wherein each of the plurality of possible sequences of candidate states includes one candidate state from each time step of the plurality of consecutive time steps;
output the road that the vehicle (1) currently is on or a lane that the vehicle currently is in based on the determined sequence of states that is associated with the highest probability.

15. A vehicle comprising an apparatus according to claim 14.
